# EUROPEAN PATENT APPLICATION

(11) **EP 2 672 060 A2**
(43) Date of publication of application: **11.12.2013**
(21) Application number: 13170250.8
(22) Date of filing: 03.06.2013
(51) Int. Cl.: F01D 5/00, B23P 6/00, B23K 15/00

(54) **Method for repairing a superalloy component and a corresponding repaired superalloy component**

(30) Priority: 05.06.2012 US 201213488535
(71) Applicant: General Electric Company, Schenectady, New York 12345 (US)
(72) Inventor: Cui, Yan, Greenville, SC South Carolina 29615 (US); Dimascio, Paul Stephen, Greenville, SC South Carolina 29615 (US); Kottilingam, Srikanth Chandrudu, Greenville, SC South Carolina 29615 (US); Tollison, Brian Lee, Greenville, SC South Carolina 29615 (US); Lin, Dechao, Greenville, SC South Carolina 29615 (US)
(74) Representative: Cleary, Fidelma

(57) **Abstract**

Method for repairing a superalloy component (10) include disposing a single crystal coupon (20) in a void of the superalloy component (10), disposing one or more shims (30) between the single crystal coupon (20) and the superalloy component (10), and, welding the one or more shims (30) to join with the single crystal coupon (20) and the superalloy component (10) using a high energy density beam welder (40). A corresponding repaired superalloy component is also provided.

## Description

### BACKGROUND OF THE INVENTION

The subject matter disclosed herein relates to superalloy components and, more specifically, to repairing superalloy components using single crystal coupons.

Nickel-base and cobalt-base superalloys can be used in many high temperature demanding environments such as hot gas path locations of gas turbines. The superalloy components can provide strong and sustained mechanical performance despite the consistent presence of elevated temperatures. However, the superalloy components may still experience some damage to corrosion, erosion, fatigue or other general wear. In even some instances, new-make superalloy components may require repair to fill in voids left from casting operations and/or be joined with other superalloy components to produce a finished product.

While traditional alloys may be welded to repair such defects or enable such joining, welding superalloys can result in strain age cracking and/or liquidation cracking. High energy density welding through electron beam welding or laser beam welding can reduce the amount of cracking in the weld area of the superalloy component. However, some repairs may require the filling of large volume voids with potentially irregular shapes. Moreover, even while gas tungsten arc welding may be used for large volume build-ups, gas tungsten arc welding can still result in cracking when welding such high gamma prime superalloys.

Accordingly, alternative repaired superalloy components and methods for repairing superalloy components would be welcome in the art.

### BRIEF DESCRIPTION OF THE INVENTION

In one aspect of the invention, a method for repairing a superalloy component is provided. The method includes disposing a single crystal coupon in a void of the superalloy component, disposing one or more shims between the single crystal coupon and the superalloy component, and, welding the one or more shims to join with the single crystal coupon and the superalloy component using a high energy density beam welder.

In another aspect of the invention, a repaired superalloy component is provided. The repaired superalloy component includes a single crystal coupon disposed in a void of the repaired superalloy component, and one or more welded shims disposed between and joining the single crystal coupon and the repaired superalloy component, wherein the one or more welded shims were welded using a high energy density beam welder.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is an exemplary repair method of a superalloy component according to one or more embodiments shown or described herein;
FIG. 2 is a schematic illustration of a superalloy component with defects according to one or more embodiments shown or described herein;
FIG. 3 is a schematic illustration of a superalloy component with a void according to one or more embodiments shown or described herein;
FIG. 4 is a repaired superalloy component with a single crystal coupon according to one or more embodiments shown or described herein; and,
FIG. 5 is a micrograph of a cross-section through a consistent weld joint formed between a superalloy component and a single crystal coupon using a shim according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Superalloy components with single crystal coupons disclosed herein may generally comprise a superalloy component that had one or more defects repaired therefrom. The one or more defects can be excavated from the superalloy component to create a void. A single crystal coupon may then be placed in the void and one or more shims may be disposed between the single crystal coupon and the superalloy component. The one or more shims may then be welded using a high energy density beam welder to join with the single crystal coupon and the superalloy component. Superalloy components with single crystal coupons and methods for repairing superalloy components will be discussed in more detail herein.

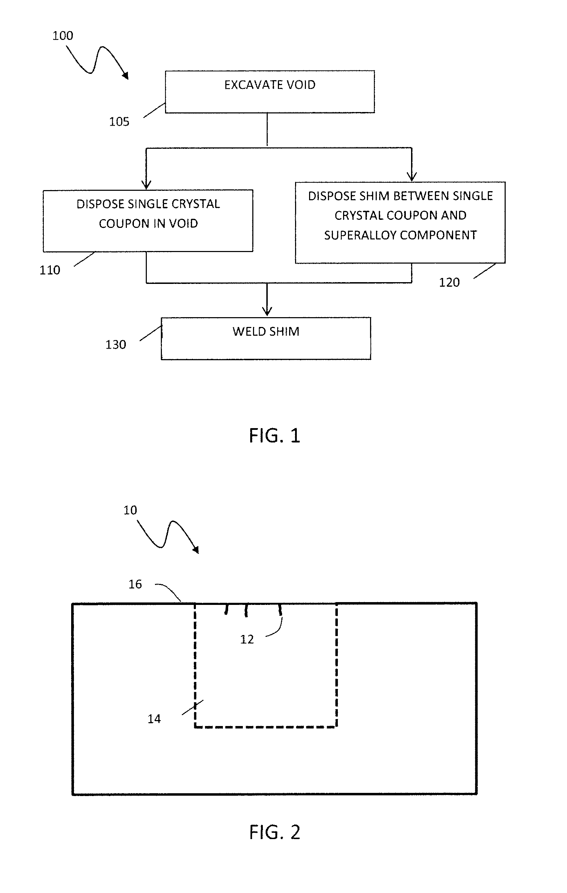

Referring now to FIG. 1, a method 100 for repairing a superalloy component is illustrated. The method 100 optionally first comprises excavating a void from the superalloy component in step 105. The method 100 further comprises disposing a single crystal coupon in the void in step 110 and disposing one or more shims between the single crystal coupon and the superalloy component in step 120. Finally, the method 100 comprises welding the shim with a high energy density beam welder in step 130. The method 100 will now be described in more detail with reference to the superalloy components illustrated in FIGS. 2-4

Referring to FIGS. 1-4, as stated above, the method 100 optionally first comprises excavating a void 19 from a superalloy component 10 in step 105. The superalloy component 10 can comprise, for example, nickel-base, cobalt-base, or nickel-iron-base superalloys. Such alloys can contain about 50% or more by weight of nickel, cobalt or nickel-iron, plus alloying elements that are added to improve the mechanical and physical properties of these alloys. These materials may be used in a variety of fields that require good strength, creep resistance, oxidation resistance, fracture toughness, and/or other mechanical properties at elevated temperatures for extended periods of time.

For example, in some embodiments, the superalloy component 10 can comprise nickel-based superalloys such as René N4^{™}, René N5^{™}, René 108^{™}, GTD-111®, GTD-222®, GTD-444® and IN-738. René N4^{™}, René N5^{™}, René 108^{™}, GTD-111®, GTD-222® and GTD-444® comprise gamma prime-strengthened nickel-based superalloys whose compositions are reported in various literature, including U.S. Patent Nos. 4810467, 5154884, 5399313, 6074602, 6416596, 6428637, and others. The nominal composition of IN-738 is reported as, by weight, about 16% chromium, 8.5% cobalt, 1.75% molybdenum, 2.6% tungsten, 1.75% tantalum, 0.9% niobium, 3.4% aluminum, 3.4% titanium, 0.10% zirconium, 0.01% boron, 0.17% carbon, the balance nickel and impurities. In some embodiments, the superalloy component can comprise cobalt-base superalloys such as FSX-414. The nominal composition of FSX-414 is, by weight, about 29.5% chromium, 10.5% nickel, 7% tungsten, up to 2% iron, 0.25% carbon, and 0.012% boron, the balance cobalt and incidental impurities. The superalloy component 10 can also comprise a variety of parts for different applications. For example, in some embodiments the superalloy component 10 can comprise a hot gas path turbine component such as a bucket, vane, nozzle or any other turbine component that may be subjected to elevated temperatures during operation.

As best illustrated in FIG. 2, in some embodiments the superalloy component 10 can comprise one or more defects 12 along its surface 16. The one or more defects 12 can comprise a variety of types of defects such as cracks, divots, wear patterns or other defects that reduce the performance of the superalloy component at that location. The one or more defects 12 can be caused from fatigue during operation, collision strikes, or any other events or instances of corrosion and/or erosion. In embodiments where the superalloy component 10 comprises a hot gas path turbine component, the surface 16 comprising the one or more defects 12 may comprise a leading edge (such as a leading edge on a nozzle).

Referring now to FIGS. 1-3, in order to repair the one or more defects 12 on the surface 16 of the superalloy component 10, a void 19 may be present or created to address the defects. For example, if the superalloy component 10 still contains the one or more defects 12 when initially received for repair, a portion 14 of the superalloy component 10 may be excavated in step 105 of method 100 to remove said one or more defects 12 from the superalloy component 10 and produce the void 19. In some embodiments, the superalloy component 10 may already contain the void 19 which was previously created to remove the one or more defects 12 prior to receiving the superalloy component 10 for repair. In even some embodiments, the one or more defects 12 may themselves comprise a void 19 (such as if a large section of material was removed during operation). In such embodiments, the present void 19 may be left alone or may be further excavated to allow for the disposal of a single crystal coupon 20 and one or more shims 30 as will become appreciated herein. In some embodiments, the void 19 may comprise a space adjacent to the superalloy component 10 such that the single crystal coupon 20 will eventually be joined to one side of the superalloy component 10. In even some embodiments, the void may comprise a gap between two superalloy components 10 that are to be joined.

Referring to FIGS. 1-4, the void 19, whether already present or created through excavation in step 105 of method 100, can comprise any size and shape that allows a single crystal coupon 20 and one or more shims 30 to be disposed therein. For example, in some embodiments, such as those illustrated in FIGS. 1-4, the void 19 can comprise a geometric shape. Such embodiments may allow for the subsequent insertion into complimentary geometric-shaped single crystal coupon 20 into the void 19. In other embodiments, the void 19 may comprise other shapes such as rods, pyramids, spheres, or any other suitable geometrical or non-geometrical shape (or combinations thereof), or any other shape that allows for the removal of one or more defects 12 from the superalloy component 10. In some embodiments the void 19 may have a substantially uniform width. In other embodiments, the void 19 may comprise a tapered or variable profile. In some embodiments, the shape of the void 19 is selected based on the shape(s) of one or more preexisting single crystal coupons 20.

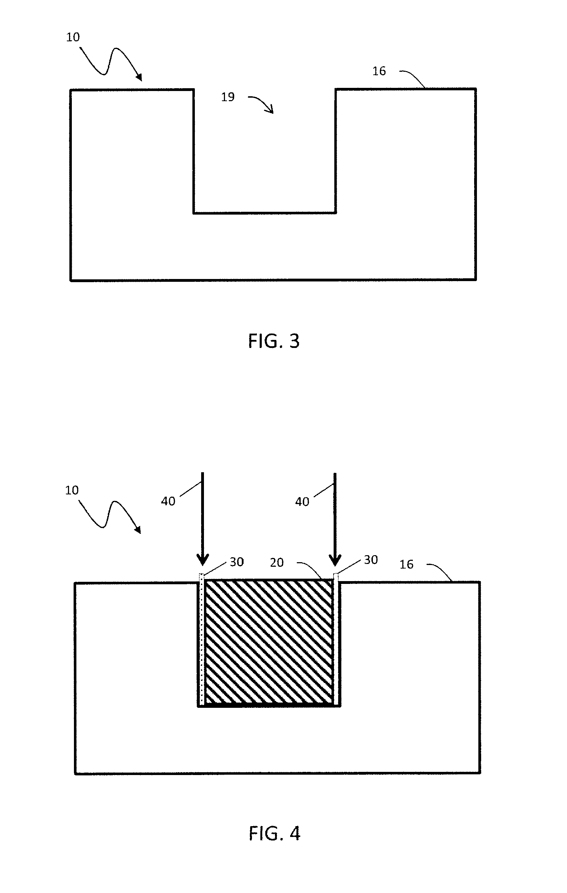

Referring now to FIGS. 1 and 4, the method 100 further comprises disposing a single crystal coupon 20 in the void in step 110 as well as disposing one or more shims between the single crystal coupon 20 and the superalloy component in step 120. The disposal of the single crystal coupon 20 in step 110 and the one or more shims 30 in step 120 may occur in any relative order that can ultimately result in the single crystal coupon 20 disposed in the void 19 of the superalloy component 10 with the one or more shims 30 disposed there between (as illustrated in FIG. 4). For example, the single crystal coupon 20 may be disposed before the one or more shims 30, after the one or more shims 30, simultaneously with the one or more shims 30 or in an alternating order with the one or more shims 30.

The single crystal coupon 20 can comprise any single crystal material including the same material as, or a material similar in composition to, the superalloy component 10. For example, in some embodiments, the single crystal coupon 20 can comprise René N5^{™}. The single crystal coupon 20 can comprise any shape that is complimentary to the void 19 such that the single crystal coupon 20 substantially fills in the missing superalloy component 10. For example, where the void 19 comprises a substantially geometric shape such as that discussed above and illustrated in FIGS. 2 and 3, the single crystal coupon 20 can comprise the same geometric shape such as illustrated in FIG. 4.

Furthermore, the single crystal coupon 20 can be provided or machined to provide a close fit with the void 19 such that the addition of one or more shims 30 secures the single crystal coupon 10 in place. For example, in some embodiments the single crystal coupon 10 can be sized such that it fills the void to only leave a gap of less than about 0.3 cm, less than about 0.2 cm, less than about 0.1 cm, less than about 0.05 cm or even less than about 0.125 cm. In some embodiments, at least one of the one or more shims can comprise a thickness of between about 0.38 mm to about 1.02 mm.

Still referring to FIGS. 1 and 4, the one or more shims 30 can comprise any material or combinations of material that can be welded using a high energy density beam welder to join the single crystal coupon 20 to the superalloy component 10. For example, in some embodiments the one or more shims 30 can comprise a ductile superalloy material such as IN617, IN625 or HA230. In some embodiments, the one or more shims 30 may be capable of joining materials such as René N5^{™} to René 108^{™}.

For example, in one embodiments, at least one of the one or more shims 30 can comprise a composition of from about 9 percent to about 16 percent chromium, from about 7 percent to about 14 percent cobalt, from about 10 percent to about 20 percent molybdenum, from about 1 percent to about 5 percent iron, from about 0.05 percent to about 0.75 percent aluminum, from about 0.5 percent to about 2 percent titanium, from about 0.02 percent to about 0.1 percent carbon, from about 0.55 percent to about 2.75 percent combined titanium and aluminum, and the balance nickel. In some embodiments, at least one of the one or more shims 30 can comprise a composition of about 12.5 percent chromium, about 10.5 percent cobalt, about 15 percent molybdenum, about 3 percent iron, about 0.25 percent aluminum, about 1.1 percent titanium, about 0.06 percent carbon, about 1.65 percent combined titanium and aluminum and the remainder nickel. Such compositions may be realized by any operable alloying method.

Moreover, the size and shape of the one or more shims 30 can depend on the size and shape of the void 19 and the single crystal coupon 20. In some embodiments, the one or more shims 30 can extend past the surface 16 of the superalloy component 10 such as illustrated in FIG. 4. In some embodiments, the one or more shims 30 may fill the entire gap between the single crystal coupon 20 and the superalloy component 10. In some embodiments, the one or more shims may only a fill a portion of the gap between the single crystal coupon 20 and the superalloy component 10.

Referring to FIGS 1 and 4, after the single crystal coupon 20 is disposed in the void 19 in step 110, and after the one or more shims 30 are disposed between the single crystal coupon 20 and the superalloy component 10 in step 120, the one or more shims 30 are welded using a high energy density beam welder 40 in step 130. The high energy density beam welder 40 can comprise any welding apparatus that utilizes a high energy density beam such as an electron beam welder or laser beam welder. The high energy density beam welder 40 can thereby weld the one or more shims 30 to join the single crystal coupon 20 and the superalloy component 10.

The operating parameters of the high energy density beam welder 40 can vary depending on the size, shape and material of the one or more shims 30. For example, in some embodiments, such as when an electron beam welder is used, a voltage of between about 100 kV and about 130 kV may be used with a current of between about 25 mA to about 35 mA. In some embodiments, even higher voltages and/or currents may be used to ensure full penetration thereby reducing the possibility of earlier cyclic fatigue of the joint. Similarly, the travel speed of the electron beam welder may comprise from about 50 cm per minute to about 75 cm per minute and may be controlled to vary the intensity of the beam based on the size, shape and location of the one or more shims 30. It should be appreciated that the travel speed of the high energy density beam should not drop too low as to overheat and potentially damage the joint, nor rise too high to prevent full penetration of the weld. In some embodiments, other high density beam welding parameters may be tailored to the given weld such as oscillation, frequency and/or focus.

After the one or more shims 30 are welded with the high energy density beam welder in step 130, the superalloy component 10 may optionally undergo any subsequent post-welding treatment. For example, in some embodiments the superalloy component 10 may be undergo a post weld heat treatment to assist in relieving stress from the weld. In some embodiments, the superalloy component 10 may be machined such as to remove excess material (e.g., material from the one or more shims 30) or ensure a smooth surface around the single crystal coupon 20. In even some embodiments, the superalloy component 10 may undergo non-destructive evaluation (e.g., fluorescent penetration inspection, ultrasonic testing, etc.) to ensure the final repaired part is structurally sound.

Referring to FIGS. 1-4, the method 100 may therefore be used to produce a repaired superalloy component 10. The repaired superalloy component can comprise a single crystal coupon 20 replacing a previous void 19 in the superalloy component 10. The single crystal coupon 20 is secured by one or more welded shims 30 between the single crystal coupon 20 and the superalloy component 10 which were welded using a high energy density beam welder 40. By utilizing a single crystal coupon 20 and one or more shims 30 welded with a high energy density beam welder 40, the repaired superalloy component 10 can better maintain its mechanical properties while reducing the amount of grain boundaries present in the repaired area. This reduction in grain boundaries can therefore decrease the initiation and/or propagation of weld cracks in the repaired superalloy component 10. For example, both creep resistance and thermo-mechanical fatigue behavior can be enhanced in the area of the single crystal coupon 20 as a result of the absence of grain boundaries. Likewise, the mechanical properties, corrosion performance and oxidization resistance of the single crystal coupon 20 may provide a stronger repaired superalloy component 10 than if multiple crystal microstructures were present such as from the build up by gas tungsten arc welding.

### EXAMPLE

A superalloy component was repaired using a single crystal coupon and a shim using the methods disclosed herein. The superalloy component comprised René 108^{™} and the single crystal coupon comprised René N5^{™}. A 4 mm shim was disposed between the single crystal coupon and the superalloy component. The shim had a composition of about 12.5 percent chromium, about 10.5 percent cobalt, about 15 percent molybdenum, about 3 percent iron, about 0.25 percent aluminum, about 1.1 percent titanium, about 0.06 percent carbon, about 1.65 percent combined titanium and aluminum and the remainder nickel. The shim was then welded using a laser beam welder and post weld heat treated at 1205 °C for 2 hours.

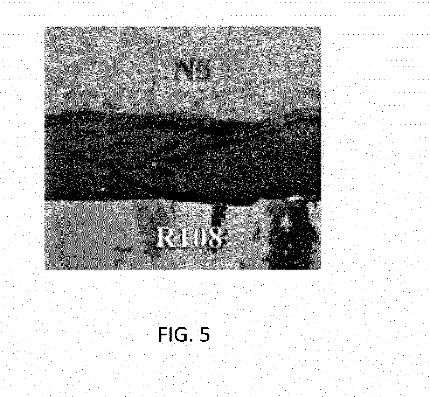

Microscopic analysis (presented in FIG. 5) verified consistent joining between the superalloy component (identified as R108) and the single crystal coupon (identified as N5). Furthermore, fluorescent penetration inspection did not reveal any indications of defects in either the as-welded or post weld heat treated conditions.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A repaired superalloy component comprising:
   a single crystal coupon disposed in a void of the repaired superalloy component; and,
   one or more welded shims disposed between and joining the single crystal coupon and the repaired superalloy component, wherein the one or more welded shims were welded using a high energy density beam welder.
2. The repaired superalloy component of clause 1, wherein the superalloy component comprises nickel-base alloy.
3. The repaired superalloy component of clause 1 or 2, wherein the superalloy component comprises René 108.
4. The repaired superalloy component of any preceding clause, wherein the single crystal coupon comprises René N5.
5. The repaired superalloy component of any preceding clause, wherein the repaired superalloy component comprises a hot gas path turbine component.
6. The repaired superalloy component of any preceding clause, wherein the single crystal coupon is disposed proximate a leading edge of the hot gas path turbine component.
7. The repaired superalloy component of any preceding clause, wherein at least one welded shim comprises a more ductile superalloy material than the single crystal coupon.
8. The repaired superalloy component of any preceding clause, wherein at least one of the one or more welded shims comprises a composition of from about 9 percent to about 16 percent chromium, from about 7 percent to about 14 percent cobalt, from about 10 percent to about 20 percent molybdenum, from about 1 percent to about 5 percent iron, from about 0.05 percent to about 0.75 percent aluminum, from about 0.5 percent to about 2 percent titanium, from about 0.02 percent to about 0.1 percent carbon, from about 0.55 percent to about 2.75 percent combined titanium and aluminum, and the balance nickel.
9. The repaired superalloy component of any preceding clause, wherein the composition is about 12.5 percent chromium, about 10.5 percent cobalt, about 15 percent molybdenum, about 3 percent iron, about 0.25 percent aluminum, about 1.1 percent titanium, about 0.06 percent carbon, about 1.65 percent combined titanium and aluminum and the remainder nickel.

## Claims

1. A method (100) for repairing a superalloy component (10), the method comprising:
disposing (110) a single crystal coupon (20) in a void (19) of the superalloy component (110);
disposing (120) one or more shims (30) between the single crystal coupon (20) and the superalloy component (10); and,
welding (130) the one or more shims (30) to join with the single crystal coupon (20) and the superalloy component (10) using a high energy density beam welder (40).

2. The method of claim 1, further comprising excavating (105) the void (19) prior to disposing the single crystal coupon (26) in the void (19).

3. The method of claim 2, wherein excavating (105) the void (19) comprises removing one or more defects (12) from the superalloy component (10).

4. The method of any of claims 1 to 3, further comprising shaping the single crystal coupon (20) to compliment the void (19) prior to disposing the single crystal coupon (20) in the void (19).

5. The method of any of claims 1 to 4, wherein the superalloy component (10) comprises a hot gas path turbine component.

6. The method of any preceding claim, wherein the void (19) is on a leading edge of a nozzle.

7. The method of any preceding claim, wherein the superalloy component (10) comprises nickel-base alloy.

8. The method of claim 7, wherein the superalloy component comprises René 108.

9. The method of claim 7, wherein the single crystal coupon comprises René N5.

10. The method of any preceding claim, wherein the high energy density beam welder (40) comprises an electron beam welder.

11. The method of any preceding claim, further comprising heat treating the superalloy component (10) after welding.

12. The method of any preceding claim, wherein at least one of the one or more shims (30) comprises a composition of from about 9 percent to about 16 percent chromium, from about 7 percent to about 14 percent cobalt, from about 10 percent to about 20 percent molybdenum, from about 1 percent to about 5 percent iron, from about 0.05 percent to about 0.75 percent aluminum, from about 0.5 percent to about 2 percent titanium, from about 0.02 percent to about 0.1 percent carbon, from about 0.55 percent to about 2.75 percent combined titanium and aluminum, and the balance nickel.

13. The method of claim 12, wherein the composition is about 12.5 percent chromium, about 10.5 percent cobalt, about 15 percent molybdenum, about 3 percent iron, about 0.25 percent aluminum, about 1.1 percent titanium, about 0.06 percent carbon, about 1.65 percent combined titanium and aluminum and the remainder nickel.

14. A repaired superalloy component (10) comprising:
a single crystal coupon (20) disposed in a void (19) of the repaired superalloy component (10); and,
one or more welded shims (30) disposed between and joining the single crystal coupon (20) and the repaired superalloy component (10), wherein the one or more welded shims (30) were welded using a high energy density beam welder (40).

15. The repaired superalloy component of claim 14, wherein at least one welded shim comprises a more ductile superalloy material than the single crystal coupon.
